(19) Europäisches Patentamt
European Patent Office
Office européen des brevets

(11) EP 2 681 086 B1

(12) # EUROPÄISCHE PATENTSCHRIFT

(45) Veröffentlichungstag und Bekanntmachung des Hinweises auf die Patenterteilung:
**01.02.2017 Patentblatt 2017/05**

(21) Anmeldenummer: **12706597.7**

(22) Anmeldetag: **01.03.2012**

(51) Int Cl.:
***B60T 8/171*** *(2006.01)* ***B60T 8/1755*** *(2006.01)*
***B60T 8/88*** *(2006.01)*

(86) Internationale Anmeldenummer:
**PCT/EP2012/053508**

(87) Internationale Veröffentlichungsnummer:
**WO 2012/117050 (07.09.2012 Gazette 2012/36)**

(54) **INTELLIGENTE FAHRZEUGSENSOREINRICHTUNG**

INTELLIGENT VEHICLE SENSOR DEVICE

SYSTÈME DE CAPTEURS DE VÉHICULE INTELLIGENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2011 DE 102011004973**

(43) Veröffentlichungstag der Anmeldung:
**08.01.2014 Patentblatt 2014/02**

(73) Patentinhaber: **Continental Teves AG & Co. OHG**
**60488 Frankfurt (DE)**

(72) Erfinder:
- **KOUKES, Vladimir**
  **64297 Darmstadt (DE)**
- **HERBST, Ralf**
  **56355 Nastätten (DE)**
- **KITZ, Rainer**
  **61130 Nidderau (DE)**
- **SCHMIDT, Robert**
  **65779 Kelkheim (DE)**
- **WANKE, Peter**
  **60437 Frankfurt (DE)**

(56) Entgegenhaltungen:
**EP-A1- 1 388 473**
**WO-A1-03/043862**
**WO-A1-2005/056360**
**DE-A1- 19 725 058**
**DE-A1-102005 053 902**
**DE-A1-102009 039 028**
**US-A1- 2004 061 500**
**US-A1- 2010 131 233**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 681 086 B1

## Beschreibung

Die Erfindung betrifft eine Fahrzeugsensoreinrichtung gemäß Oberbegriff von Anspruch 1 und die Verwendung in einem Bremssystem gemäß Anspruch 13.

Kraftfahrzeuge sind heute mit einer Vielzahl von elektronisch geregelten Systemen ausgestattet, wobei z.B. ein elektronisches bzw. elektronisch geregeltes Bremssystem, ein elektrisches Lenkungssystem bzw. eine elektronische Lenkung und eine beliebige Anzahl von Fahrerassistenzsystemen (wie "Active Front Steering", "Intelligent Headlamp Control" oder andere) gleichzeitig aktiv sein können und Informationen von verschiedenen im Fahrzeug eingebauten Sensoren nutzen.

Besonders Informationen über den Lenkwinkel, die Gierrate, und/oder Quer- und Längsbeschleunigung des Fahrzeugs sind von großer Bedeutung, da diese für eine Fahrdynamikregelung, welche durch gezielte fahrerunabhängige Bremseingriff das Fahrzeug auf dem vom Fahrer gewünschten Kurs hält, aber auch weitere Systeme genutzt werden kann. Hierbei bestehen die einander entgegengesetzten Anforderungen, diese Werte einerseits mit hoher Genauigkeit zu messen und anderseits möglichst kostengünstige Sensoren und Auswerteschaltungen einzusetzen. Es ist bekannt, Gierratensensor und Querbeschleunigungssensor in einem gemeinsamen Gehäuse an geeigneter Stelle im Fahrzeug zu platzieren (dies wird häufig als "Sensorcluster" bezeichnet). Aus der WO2008/003346 A1 ist ein Sensorcluster bekannt, bei dem Gierratensensor und Querbeschleunigungssensor (bzw. entsprechende Sensoren für alle 3 Raumachsen) und eine Recheneinheit in einem Gehäuse integriert sind. In der DE 101 07 949 B4 wird vorgeschlagen, den Sensorcluster mit dem Airbagsteuergerät zu kombinieren. Die EP 1 313 635 B1 offenbart die Integration des Sensorclusters in ein elektronisch-hydraulisches Steuergerät eines Bremssystems.

Der Lenkwinkelsensor ist in vielen Fahrzeugen separat eingebaut. Am weitesten verbreitet sind absolute Lenkwinkelsensoren, die die Lenkradposition ohne Verschiebung bzw. Offset erfassen können. Für die Signalverarbeitung wird vielfach ein externes Steuergerät verwendet, wie zum Beispiel das Steuergerät eines elektronischen Bremssystems. Diese Lösung ist mit hohen Kosten für die verwendeten Sensoren und weiteren Bauelemente bzw. das Gehäuse (Hardwarekosten) verbunden. Werden relative Lenkwinkelsensoren eingesetzt, so muss eine Bestimmung der Nullage, d.h. eine Kalibrierung der Lenkwinkelsignale erfolgen. Dies ist beispielsweise aus der DE 10 2006 046 834 A1 bekannt.

Aus der US 2004/0061500 A1 ist ein Verfahren zur Offset-Kalibrierung eines semi-relativen Lenkwinkelsensors bekannt, bei dem ein während einer Geradeausfahrt ermittelter Offset des Lenkwinkelsensors in einem nichtflüchtigen Speicher abgelegt wird und somit bei einem nachfolgenden Zündungslauf ausgelesen werden kann. Somit ist eine Neuberechnung des Offsets selten erforderlich.

Es ist Aufgabe der vorliegenden Erfindung, mehrere für elektronisch geregelte Systeme eines Kraftfahrzeugs benötigte Sensordaten auf preisgünstige Weise bei gleichzeitig hoher Zuverlässigkeit bereitzustellen.

Diese Aufgabe wird durch eine Fahrzeugsensoreinrichtung gemäß Anspruch 1 gelöst.

Eine erfindungsgemäße Fahrzeugsensoreinrichtung umfasst zumindest einen Sensor zur Erfassung der Gierrate eines Fahrzeugs, zumindest einen Sensor zur Erfassung der Querbeschleunigung eines Fahrzeugs, zumindest eine Recheneinheit und zumindest eine Schnittstelle eines Datenbusses, insbesondere CAN oder FlexRay, über den die Sensorsignale oder aus diesen ermittelte Sensordaten mindestens einem elektronischen Steuergerät übermittelt werden können, wobei ein Lenkwinkelsensor ausschließlich mit der Fahrzeugsensoreinrichtung verbunden ist, insbesondere mit den anderen Sensoren in einem Gehäuse integriert ist, und die Recheneinheit eine Plausibilisierung und/oder Kalibrierung der Gierratensignale und/oder der Querbeschleunigungsignale und/oder der Lenkwinkelsignale vornimmt.

Unter Sensorsignalen sind die "Rohinformationen" zu verstehen, während Sensordaten sowohl bearbeitete Sensorsignale als auch von diesen abgeleitete Informationen umfassen. Weil der Lenkwinkelsensor ausschließlich mit der Fahrzeugsensoreinrichtung verbunden ist, kann die Verbindung zwischen beiden speziell angepasst werden, z.B. mit einer besonders geringen Anzahl von Drähten oder einer besonders hohen Störfestigkeit. Durch die Schnittstelle zu einem Datenbus können die Sensordaten mehreren Systemen bzw. Steuergeräten bereitgestellt werden. Hierbei können die Sensordaten in Datenpaketen mit einem geeigneten Format gesendet werden, um ein Optimum an Informationen bei möglichst geringer Belastung des Datenbusses zu übertragen.

Dadurch, dass die erfindungsgemäße Fahrzeugsensoreinrichtung die Plausibilisierung und/oder Kalibrierung der Sensorsignale ausführt, wird zweckmäßigerweise das Steuergerät des elektronischen Bremssystems entlastet. Weiterhin verringert sich die Komplexität der Software des Steuergeräts, was im Hinblick auf Verifizierung der Fehlerfreiheit und Wartung der Software vorteilhaft ist. Besonders für kostengünstige Fahrzeuge ist die erfindungsgemäße Fahrzeugsensoreinrichtung vorteilhaft, da ein vereinfachtes Steuergerät mit geringeren Herstellungskosten verbunden ist.

Zweckmäßigerweise werden über zumindest eine Schnittstelle Fahrgeschwindigkeitsdaten empfangen, und die Gierratensignale und Querbeschleunigungssignale werden mittels dieser Daten auf Plausibilität überprüft. Insbesondere wird betrachtet, ob das Produkt aus Gierrate und Fahrzeuggeschwindigkeit betragsmäßig um nicht mehr als einen vorgegebenen Schwellenwert von der gemessenen Querbeschleunigung abweicht. Somit wird die Zuverlässigkeit der zur Verfügung gestellten Sensordaten erhöht und die empfangenden Steuergeräte können auf eine Plausibilisierung vollständig verzichten oder den Umfang der Überprüfungen reduzieren.

Hierbei ist es besonders zweckmäßig, wenn die Fahrgeschwindigkeitsdaten eine von Raddrehzahlsensoren abgeleitete Fahrzeuggeschwindigkeit und/oder Radgeschwindigkeiten mehrerer Räder und/oder eine von Navigationsdaten abgeleitete Fahrzeuggeschwindigkeit umfassen. Wenn freie Sicht zum Himmel herrscht, können z.B. Navigationsgeräte nach dem GPS- oder ähnlichen Verfahren zuverlässige Fahrgeschwindigkeitsdaten liefern. Raddrehzahlsensoren werden z.B. für die Durchführung einer Bremsschlupfsteuerung benötigt und sind daher in nahezu jedem Fahrzeug verfügbar. Gegebenenfalls kann auch eine Gierrate des Fahrzeugs aus Radgeschwindigkeitsdifferenzen geschätzt werden.

Vorzugsweise erfolgt eine Kalibrierung relativer Lenkwinkelsignale zumindest mittels der Daten oder Signale des Gierratensensors und/oder des Querbeschleunigungssensors, und über zumindest eine Schnittstelle eines Datenbusses werden absolute Lenkwinkeldaten bereitgestellt. Diese stehen somit allen verbundenen Steuergeräten ohne weiteren Konvertierungsaufwand zur Verfügung.

Es ist vorteilhaft, wenn die Recheneinheit als kernredundanter Mikrocontroller ausgeführt ist und vorzugsweise mindestens ein Sensor, insbesondere Gierratensensor, Querbeschleunigungssensor und Lenkwinkelsensor, ebenfalls redundant ausgeführt ist/sind. Somit kann eine hohe Betriebssicherheit der Fahrzeugsensoreinrichtung erreicht werden.

Bevorzugt umfasst die Fahrzeugsensoreinrichtung mindestens einen Längsbeschleunigungssensor. Die Daten eines Längsbeschleunigungssensors werden für Assistenzfunktionen wie eine Anfahrhilfe am Berg eingesetzt. Zusätzlich können sie zur Abschätzung der Fahrzeuggeschwindigkeit (durch Integration) oder zur Plausibilisierung empfangener Radsensordaten herangezogen werden.

Besonders zweckmäßig ist es, wenn die Fahrzeugsensoreinrichtung ein Modul zur Ansteuerung von Airbags umfasst, wobei die Daten eines oder mehrerer Beschleunigungs- und/oder Körperschallsensoren von der Recheneneinheit ausgewertet werden. Gegebenenfalls können vorhandene Sensordaten für eine Auslösung der Airbags ausgewertet werden. Werden zusätzliche Beschleunigungssensoren mit einem nutzbaren Meßbereich eingesetzt, der während einer Fahrt üblicherweise auftretende Beschleunigungen übersteigt, so können diese zur Plausibilisierung der Signale der übrigen Sensoren eingesetzt werden, um kurzzeitige Störungen zu erkenn. Neben verringerten Kosten ist auch das verringerte benötigte Volumen vorteilhaft.

Gemäß einer bevorzugten Ausführungsform der Erfindung steuert die Recheneinheit einen Servomotor zur Unterstützung der Lenkbewegung durch den Fahrer an, und insbesondere bringt dieser ein zusätzliches Lenkmoment nach Maßgabe von über mindestens eine Schnittstelle empfangenen Daten auf. Somit können fortgeschrittene Fahrdynamikregelungen eingesetzt werden, welche z.B. den Bremsweg auf einer Fahrbahn mit seitenweise unterschiedlichem Reibwert ($\mu$-split-Situation) durch einen kombinierten Brems- und Lenkeingriff verringern, ohne das zusätzliche Steuergeräte erforderlich sind. Insbesondere ist es auch möglich, dass die Aufteilung der Funktionen zwischen Steuergerät des Bremssystems und Fahrzeugsensoreinrichtung in Abhängigkeit von den bei der Initialisierung jeweils erfolgten Selbsttests erfolgt. Somit kann die Betriebssicherheit des Gesamtsystems erhöht werden.

Zweckmäßigerweise umfasst die Fahrzeugsensoreinrichtung eine Stromversorgungseinrichtung, welche mit einem Bordnetz des Fahrzeugs verbunden ist und mindestens eine stabilisierte Spannung bereitstellt, sowie vorzugsweise einen Kondensator aufweist, der einen Ausfall des Bordnetzes für zumindest eine vorgegebene Zeitdauer überbrücken kann. Dies hat den Vorteil, dass die Sensordaten unabhängig von externen Schaltungen zur Verfügung stehen, sobald die Zündung aktiviert wurde, und vorzugsweise auch für eine vorgegebene zusätzliche Zeitdauer.

Es ist vorteilhaft, wenn die Recheneinheit der Fahrzeugsensoreinrichtung eine Überprüfung der Müdigkeit des Fahrers ausführt, wobei über zumindest eine Schnittstelle eine Warnung ausgegeben wird, wenn der Lenkradwinkel und/oder die Lenkradwinkelgeschwindigkeit für einen ersten vorgegebenen Zeitraum einen ersten vorgegebenen Schwellenwert unterschreitet und anschließend vor Ablauf eines zweiten vorgegebenen Zeitraums einen zweiten vorgegebenen Schwellenwert überschreitet. Somit kann ein "Sekundenschlaf" des Fahrers erkannt und rechtzeitig die Notwendigkeit einer Pause angezeigt werden.

Zweckmäßigerweise stellt die Recheneinheit der Fahrzeugsensoreinrichtung nach Maßgabe einer Anforderung durch ein elektronisches Steuergerät und/oder nach Maßgabe einer Überprüfung der vorhandenen Sensoren Funktionen für ein oder mehrere Steuergeräte bereit, wobei eine Übermittlung von Daten über mindestens eine Schnittstelle erfolgt. Somit werden die entsprechenden Steuergeräte entlastet. Dadurch, dass die bereitgestellten Funktionen in Abhängigkeit von einer externen Anforderung und/oder der vorhandenen Bestückung mit Sensoren gewählt werden, kann die Fahrzeugsensoreinrichtung mit einer unveränderten Steuersoftware in einer Vielzahl verschiedener Fahrzeuge eingesetzt werden.

Die Erfindung betrifft weiterhin die Verwendung einer erfindungsgemäßen Fahrzeugsensoreinrichtung in einem Bremssystem für ein durch einen Verbrennungsmotor und/oder mindestens einen Elektromotor angetriebenes Kraftfahrzeug, wobei das Bremssystem Mittel zum fahrerunabhängigen Aufbau von Bremsmoment an einem oder mehreren Rädern umfasst, sowie mindestens ein elektronisches Steuergerät, welches Signale von mindestens einem Raddrehzahlsensor empfängt und das oder die Mittel zum fahrerunabhängigen Aufbau von Bremsmoment ansteuert. Hierbei sind die Fahrzeugsensoreinrichtung und das elektronische Steuergerät über mindestens einen Datenbus miteinander verbunden.

Bevorzugt führt die Recheneinheit der Fahrzeugsensoreinrichtung eine Fahrdynamikregelung aus und sendet über mindestens eine Schnittstelle eines Datenbusses Bremsanforderungen an das oder die Steuergeräte des Bremssystems. Somit verringert sich die Komplexität des elektronischen Steuergeräts des Bremssystems, was die Verwendung eines langsameren Prozessors ermöglicht und/oder eine Vereinfachung der Software-Struktur gewährleistet.

In einer bevorzugten Ausführungsform der Erfindung wird die erfindungsgemäße Fahrzeugsensoreinrichtung in Verbindung mit elektromechanischen Bremsen eingesetzt, d.h. insbesondere die Radbremsen mindestens einer Achse werden elektromechanisch betrieben werden. Gemäß einer besonders bevorzugten Ausführungsform der Erfindung wird eine Fahrdynamikregelung von dem Prozessor der Fahrzeugsensoreinrichtung ausgeführt. Somit entfällt die Notwendigkeit eines leistungsstarken eigenständigen Steuergeräts des Bremssystems, vielmehr stellt diese Funktionalität die Fahrzeugsensoreinrichtung in Verbindung mit den Steuergeräten der elektromechanischen Radbremsen bereit.

Gemäß einer bevorzugten Ausführungsform der Erfindung ist das Bremssystem an den Rädern mindestens einer Achse mit hydraulischen Radbremsen ausgestattet und das elektronische Steuergerät des Bremssystems umfasst einen Hydraulikblock mit mindestens einer Pumpe und mindestens einem Hydraulikventil, wobei das elektronische Steuergerät den Hydraulikblock zur fahrerunabhängigen Änderung des Bremsdrucks ansteuern kann. In einer besonders bevorzugten Ausführungsform der Erfindung sind die Räder einer weiteren Achse mit elektromechanischen Radbremsen ausgestattet.

Weitere bevorzugte Ausführungsformen ergeben sich aus den Unteransprüchen und der nachfolgenden Beschreibung eines Ausführungsbeispiels an Hand von Figuren.

Es zeigen

Fig. 1 ein erstes Ausführungsbeispiel der erfindungsgemäßen Fahrzeugsensoreinrichtung,

Fig. 2 ein weiteres Ausführungsbeispiel,

Fig. 3 eine alternative Darstellung der erfindungsgemäßen Fahrzeugsensoreinrichtung, und

Fig. 4 ein Schema der Software-Architektur einer erfindungsgemäßen Fahrzeugsensoreinrichtung.

Fig. 1 zeigt eine beispielhafte Architektur der erfindungsgemäßen Fahrzeugsensoreinrichtung, d.h. eines intelligenten Sensorclusters 100. Hierbei sind Gierratensensor 1, Querbeschleunigungssensor 2, Lenkwinkelsensor 3 (vorzugsweise relativ) und Prozessor 4 auf einer gemeinsamen Hauptplatine 5 integriert. Die Sensordaten werden über einen Datenbus 7 an das elektronische Steuergerät 6 des Bremssystems übertragen. Der Datenbus 7 kann gemäß einem Standard wie CAN oder FlexRay realisiert sein oder ein spezielles bzw. proprietäres Signalschema und Übertragungsprotokoll einsetzen. Während in dem gezeigten Ausführungsbeispiel eine bidirektionale Kommunikation zwischen Fahrzeugsensoreinrichtung 100 und elektronischem Steuergerät 6 vorgesehen ist, könnte prinzipiell auch eine rein unidirektionale Übertragung der Sensordaten an das Steuergerät 6 erfolgen. Dadurch, dass die Sensoren in einem Gerät, also einem intelligenten Sensorcluster bzw. einer erfindungsgemäßen Fahrzeugsensoreinrichtung eingebaut sind, werden die Herstellungskosten reduziert. Ein Vorteil des intelligenten Sensorclusters besteht darin, dass alle Sensorelemente eine gemeinsame Stromversorgung, Einbauplatine, Verbindungsteile, und Gehäuse besitzen sowie auch eine gemeinsame Software benutzt wird. Das intelligente Sensorcluster wird zweckmäßigerweise auf bzw. an der Lenksäule des Fahrzeugs eingebaut, da der Lenkwinkelsensor zur Erfassung des Lenkwinkels mit der Lenksäule verbunden wird.

In einer anderen Ausführungsform kann der intelligente Sensorcluster auch mit dem Steuergerät eines elektrischen Lenkungssystems in einem Gehäuse integriert sein. Diese alternative Architektur der erfindungsgemäßen Fahrzeugsensoreinrichtung ist in Fig. 2 dargestellt. Abweichend von Fig. 1 steuert die Recheneinheit hierbei eine elektronische Lenkung 3' an, die Informationen zum Lenkwinkel bereitstellt, wodurch der Lenkwinkelsensor 3 als separates Bauteil entfallen kann. Die Übertragung der Lenkwinkeldaten und die Anforderung eines Lenkmoments durch die Recheneinheit kann sowohl über einen standardkonformen Datenbus 7' wie auch über eine spezielle Datenverbindung erfolgen. Zweckmäßigerweise erfolgt in dieser alternativen Architektur auch die Stromversorgung des Aktuators durch die Fahrzeugsensoreinrichtung, die insbesondere auch eine Ansteuerschaltung für den Aktuator umfasst.

Die Hauptelemente eines Ausführungsbeispiels der erfindungsgemäßen Fahrzeugsensoreinrichtung sind in Fig. 3 gezeigt. Die Fahrdynamikgrößen Gierrate, Längsbeschleunigung, Querbeschleunigung und Lenkwinkel werden mit eingebauten Sensoren gemessen, wobei Gierratensensor 1, Querbeschleunigungssensor 2, Längsbeschleunigungssensor 8 und Lenkradwinkelsensor 3 signalmäßig mit Recheneinheit 4 verbunden sind. Gegebenenfalls befindet sich auch eine erforderliche Auswerteelektronik ebenfalls auf Platine 5. Vorzugsweise wird die Kombination der Sensoren, z.B. ob ein Längsbeschleunigungssensor verbaut wird, abhängig von den Anforderungen für das jeweilige Fahrzeug geändert. Wird, wie in der anhand Fig. 2 erläuterten Ausführungsform, die Recheneinheit zusätzlich zur Ansteuerung eines elektrischen Lenkungssystems eingesetzt, so können relative Werte des Lenkwinkels in dem elektrischen Lenkungssystem gemessen werden, so dass kein separater bzw. zusätzlicher Lenkwinkelsensor in die Fahrzeugsensoreinrichtung eingebaut werden muss. Je nach gewünschter Verfügbarkeit kann es insbesondere auch vorgesehen sein, einen oder mehrere Sensoren redundant auszulegen, wodurch ein Vergleich der Sensordaten zusätzlich zu einer Plausibilisierung anhand der Daten weiterer Sensoren erfolgen kann. Diese Variante ist besonders vorteilhaft, wenn auch die Recheneinheit der Fahrzeugsensoreinrichtung als kernredundanter Mikrocontroller ausgeführt ist und somit erhöhten Sicherheitsanforderungen genügt. Die Kommunikation zwischen dem intelligenten Sensorcluster und anderen Fahrzeugsystemen bzw. Steuergeräten wird über ein Interface bzw. eine Schnittstelle 9 realisiert, welche zum Beispiel mit einem Datenbus gemäß bekannter Standards (CAN, FlexRay) verbunden ist. Der intelligente Sensorcluster weist eine Stromversorgung 11 auf, die mit dem Bordnetz (z.B. Kl_30) des Fahrzeugs verbunden ist und geeignete (insbesondere stabilisierte) Spannungen für Sensoren, Recheneinheit und Interface bereitstellt.

Die Verarbeitung der gemessenen Werte findet in einer Recheneinheit bzw. einem Prozessor statt. Besonders zweckmäßig ist die Verwendung eines Mikrocontrollers, der bereits einen nichtflüchtigen Speicher wie ein ROM aufweist, in dem die Programme bzw. Softwaremodule gespeichert sind. Die bereitgestellten Funktionen werden vorzugsweise abhängig von den Anforderungen geändert, wobei - wie unten beschrieben - eine Anzahl von Softwaremodulen ausgewählt werden kann. Fahrzeug- und Softwareparameter werden bevorzugt in ein EEPROM des Mikrocontrollers geschrieben. Fahrzeugparameter können zum Beispiel bei der Applikation des Gerätes für einen Fahrzeugtyp in Fahrversuchen ermittelt werden.

Gemäß einem weiteren Ausführungsbeispiel kann die Recheneinheit des intelligenten Sensorclusters auch eine Fahrdynamikregelung bereitstellen. Insbesondere, wenn mehrere elektromechanische Radbremsen eingesetzt werden, die jeweils ein eigenes Steuergerät aufweisen, kann dadurch ein zentrales Bremssystemsteuergerät entfallen. Alternativ oder zusätzlich wird die Fahrzeugsensoreinrichtung vorzugsweise gleichzeitig als Airbag-Steuergerät eingesetzt.

Ein Vorteil des intelligenten Sensorclusters besteht darin, dass kostengünstige relative Sensoren für die Lenkwinkelmessung benutzt werden können. Ein relativer Lenkwinkelsensor zeigt immer nach seiner Initialisierung (beim Zündungsstart) einen Wert von Null für den Lenkwinkel an, unabhängig davon, ob sich die Lenkung tatsächlich zu diesem Zeitpunkt in der Mittelstellung befindet. Der jeweils aktuelle Lenkwinkel wird relativ zum ersten Wert gemessen, weshalb haben alle während einer Fahrt gemessenen Lenkwinkel eine konstante Verschiebung aufweisen. Diese Verschiebung muss sehr schnell (in Laufe der ersten Sekunden der Fahrt) bestimmt und in den Fahrzeugsystemen berücksichtigt werden. Als Basis für die Berechnung der Lenkwinkelverschiebung wird vorzugsweise ein Einspurmodell des Fahrzeugs benutzt. Für die Berechnung sind die Gierrate, Querbeschleunigung und Fahrzeuggeschwindigkeit und auch die Fahrzeugparameter (Masse, Achsenabstand, Lenkübersetzung und andere) erforderlich. Diese Größen stehen im intelligenten Sensorcluster zur Verfügung. Auf Grundlage des Modells werden theoretische Werte für den Lenkwinkel berechnet. Die theoretischen Werte werden nur dann für die Berechnung benutzt, wenn das Modell gültig ist. Die Zeitreihen, d.h. Reihen aufeinander folgender Werte für den gemessenen und theoretischen Lenkwinkel werden zweckmäßigerweise mit statistischen Methoden verarbeitet. Dafür werden die Fahrbedingungen und die statistischen Eigenschaften der Zeitreihen berücksichtigt. Zur Überprüfung der Gültigkeit des Modells wird vorzugsweise die zeitliche Ableitung der Gierrate überwacht. Wenn die Ableitung zu groß ist, werden die Modellergebnisse nicht für die Berechnung herangezogen. Ergänzend können andere an sich bekannte Bedingungen für die Überprüfung der Gültigkeit des Modells herangezogen werden.

Fig. 4 zeigt ein beispielgemäßes Schema der Software Architektur. Die Signale von Gierratensensor 1, Querbeschleunigungssensor 2, Lenkradwinkelsensor 3 und vorzugsweise Längsbeschleunigungssensor 8 werden der Recheneinheit zugeführt. Eventuelle Offsetfehler der Lenkwinkelsignale, d.h. Verschiebungen des Nullwinkels gegenüber der Lenkradstellung für eine Geradeausfahrt, werden in einem Modul "Center Detection" korrigiert. Dies ist insbesondere für relative Lenkwinkelsensoren wichtig, aber auch absolute Sensoren können prinzipiell einen Offset aufweisen, z.B. aufgrund mechanischer Toleranzen. Anschließend werden die Sensorsignale bzw. Sensordaten mit einem Modul "Low Pass Filter" einer Tiefpaßfilterung unterzogen werden, um kurzzeitige Schwankungen zu unterdrücken. Langsame Drifts der Sensorsignale werden in einem Modul "Zero drift compensation" erkannt bzw. korrigiert. Hierbei kann z.B. überprüft werden, ob die Gierrate eines stehenden Fahrzeugs mit Null angegeben wird (wie dies der Fall sein sollte). Dann findet eine Plausibilisierung der Sensordaten in einem Modul "Check Plausibility" statt. Hierbei können gegebenenfalls auch weitere über einen Datenbus empfangene Informationen herangezogen werden. Die Sensordaten werden anschließend einem Kontrollmodul "Control unit" zugeführt, welches die weiteren Softwaremodule unter Berücksichtigung empfangener bzw. in einem eigenen Speicherbereich abgelegter Parameter "Parameters" ansteuert. Die verschiedenen Module können eine Fahrtrichtungserkennung "Calculation of driving direction", die Ansteuerung von Airbags und/oder Gurtstraffern "Control of airbags and sit belts", eine Müdigkeitswarnung des Fahrers "Detection of Sleepiness of the Driver", eine Berechnung des aktuellen Kurvenradius "Calculation of radius of the curve", eine Erkennung von Unter- oder Übersteuern "Detection of oversteering and understeering", eine Berechnung der seitlichen Fahrbahn- bzw. Fahrzeugneigung "Calculation of the inclination of the road" oder eine Ermittlung der Steigung am Berg "Calculation of the uphill gradient" umfassen.

Ein Vorteil des intelligenten Sensorclusters liegt darin, dass mehrere zusätzliche Berechnungen und Kontrollfunktionen in der Software der Fahrzeugsensoreinrichtung integriert werden können. Die Software hat zweckmäßigerweise eine modulare Architektur. Diese modulare Architektur hat den Vorteil, dass die verschiedenen Softwaremodule abhängig von den Anforderungen des aktuellen Fahrzeugs aktiviert werden können. Hierbei können die oben genannten Module sowie nahezu beliebige Zusatzfunktionen bis hin zu einer Fahrdynamikregelung integriert werden.

Gemäß einer bevorzugten Ausführungsform der Erfindung fordert ein elektronisches Steuergerät, welches insbesondere ein Bremssystem steuert, bei Beginn einer Fahrt, d.h. dem Start der Zündung, eine oder mehrere Funktionen bei der erfindungsgemäßen Fahrzeugsensoreinrichtung an. Diese überprüft vorzugsweise, ob anhand der Bestückung mit Sensoren und dem Ergebnis einer Initialisierung bzw. eines SelbstTests die gewünschten Funktionen bereitgestellt werden können. Daraufhin wird eine Meldung der verfügbaren Funktionen über die entsprechende Schnittstelle an das elektronische Steuergerät ausgegeben und die entsprechende Funktionalität für die Dauer der Fahrt bereitgestellt.

Gemäß einer alternativen bevorzugten Ausführungsform der Erfindung werden die bereitzustellenden Funktionen in einem Applikationsfeld im EEPROM der Fahrzeugsensoreinrichtung gespeichert. Die Funktionen werden vorzugsweise abhängig von den Anforderungen in der Fahrzeugsensoreinrichtung implementiert bzw. aktiviert. Die Aktivierung der Funktionsmodule kann besonders bevorzugt in einem Kontrollmodul realisiert sein, wobei die Konfigurierung des Kontrollmoduls zum Beispiel über eine entsprechende Änderung eines oder mehrerer Parameter geändert werden kann.

Ganz besonders bevorzugt wird die Aktivierung oder Deaktivierung jedes Softwaremoduls in Abhängigkeit von den Parameterwerten durchgeführt. Somit können sämtliche Geräte mit einer Softwareversion ausgeliefert werden, und bei der Initialisierung werden nur die benötigten Funktionen aktiviert.

Die Anfangsnullverschiebung des Lenkwinkels wird zweckmäßigerweise in einem Softwaremodul für die Lenkwinkelnullpunktsbestimmung ("Center Detection") berechnet. Es stellt einen weiteren Vorteil des intelligenten Sensorclusters dar, dass die Kompensation der Nullverschiebungen der Sensoren wegen eventueller Drifts intern im Gerät durchgeführt werden kann. Zum Beispiel kann berücksichtigt werden, dass im Stillstand des Fahrzeugs die Gierrate gleich null sein muss. Ein Stillstand des Fahrzeugs kann anhand dem oder den Beschleunigungssensoren oder empfangener Fahrzeuggeschwindigkeitsdaten erkannt werden. Somit kann die im Stillstand gemessene Gierrate als Maß für eine Nullverschiebung des Sensors verwendet werden. Eine Nullposition des Lenkwinkelsensors wird zweckmäßigerweise in den ersten Sekunden nach Zündung ermittelt, wobei die entsprechenden Berechnungen nachher viele Male wiederholt werden können, woraufhin vorzugsweise ein Mittelwert für die Ergebnisse bestimmt wird. Eine Differenz zwischen dem ermittelten Mittelwert und der Nullposition des Lenkwinkelsensors kann als eine Nulldrift des Lenkwinkelsensors berücksichtigt werden. Außerdem können die mittleren Werte für die Gierrate, Beschleunigungen und Lenkwinkel über lange Zeitintervalle berechnet werden. Vorzugsweise werden die Ergebnisse für die Aktualisierung der Nullverschiebungen verwendet.

Die Überprüfung der Plausibilität der gemessenen Werte wird erfindungsgemäß intern im Gerät durchgeführt, wofür bevorzugt die Gierrate, die Beschleunigung(en) und insbesondere der Lenkwinkel herangezogen werden. Zum Beispiel können über das Einspurmodell berechnete Werte des Lenkwinkels mit gemessenen Werten verglichen werden. Wenn die Unterschiede zu groß sind werden die Messwerte zweckmäßigerweise als nicht plausibel eingestuft. Ein derartiger Vergleich findet bevorzugt nur bei günstigen Fahrbedingungen statt, wobei diese besonders bevorzugt im Softwaremodul für die Lenkrad Center Bestimmung definiert werden.

Es kann auch überprüft werden, ob die Verhältnisse zwischen den Gierrate $\Psi$, Querbeschleunigung $a_{Lat}$ und Fahrzeuggeschwindigkeit V plausibel sind:

$$|a_{Lat} - \psi * V| < \varepsilon_4$$

$\varepsilon_4$ - Schwellenwert

Dieser Schwellenwert wird zweckmäßigerweise mit Rücksicht auf mögliche Fahrbahnneigungen ausgewählt.

Je nach Ausführungsform können eines oder mehrere der folgenden Softwaremodule in der Sensoreinrichtung ausgeführt werden:

Ein Modul ist zweckmäßigerweise für die Kontrolle und Ansteuerung der Airbags und der Gurtstraffer verantwortlich, wobei zum Beispiel die Fahrzeugbeschleunigung als Eingangsgröße hereingezogen werden kann. Wenn die Fahrzeugbeschleunigung sprunghaft sehr große negative Werte bekommt, werden vorzugsweise die Airbags aktiviert und die Gurte gestrafft:

$$\sqrt{a_{Lat}^2 + a_{long}^2} > A$$

$$\left|\frac{\partial(\sqrt{a_{Lat}^2 + a_{long}^2})}{\partial t}\right| > B$$

$$a_{Lat} < 0$$

$$a_{Long} < 0$$

A, B - Schwellenwerte.
$a_{Lat}$ - Querbeschleunigung
$a_{Long}$ - Längsbeschleunigung

Die für die Verwendung als Airbag-Steuergerät nötige Zuverlässigkeit der Stromversorgung, insbesondere mit einem Kondensator der auch bei Ausfall des Bordnetzes die Energie für eine Zündung der Airbags bereitstellt, steht somit auch für den intelligenten Fahrzeugsensor bereit. Für die Auslösung eines Airbags üblicherweise verwendete Beschleunigungssensoren weisen einen Messbereich auf, der höhere Beschleunigungen umfasst und daher vorzugsweise auch zur Erkennung von Störungen eingesetzt wird, welche die Signale des Fahrdynamikbeschleunigungssensors verfälschen.

Die Fahrbahnneigung für die Steilfahrbahn kann in einem weiteren Modul nach Maßgabe der Gierrate, Querbeschleunigung und Fahrzeuggeschwindigkeit berechnet werden:

$$\beta = Arc\cos(\frac{a_{Lat} - \psi * V}{g})$$

$\beta$ - Fahrbahnneigung
g - Erdbeschleunigung

Ein Modul kann für die Messung der Fahrbahnsteigung im Stillstand des Fahrzeugs benutzt werden. Diese ist besonders für die Systeme für die Anfahrhilfe wie z.B. einen Berganfahrassistenten wichtig und kann zweckmäßigerweise wie folgt berechnet werden:

$$\gamma = Arc\cos\frac{a_{Long}}{g}$$

$\gamma$ - Fahrbahnsteigung

Die Fahrbahnsteigung kann auch während der Fahrt geschätzt werden. Dafür kann zum Beispiel die zeitliche Ableitung der Fahrzeuggeschwindigkeit mit eingerechnet werden:

$$\gamma = Arc\cos\frac{(a_{Long} - \frac{\partial V}{\partial t})}{g}$$

Ein Modul für die Erkennung der Fahrrichtung kann zum Beispiel die zeitliche Ableitung der Fahrzeuggeschwindigkeit und die Längsbeschleunigung miteinander vergleichen. Wenn die Vorzeichen für die beiden Werte gleich sind wird zweckmäßigerweise die Fahrrichtung "Vorwärts" erkannt. Wenn die Vorzeichen unterschiedlich sind wird zweckmäßigerweise die Fahrrichtung "Rückwärts" erkannt:

$$sign(a_{Lang}) = sign(\frac{\partial V}{\partial t}) \xrightarrow{-} Vorwärts$$

$$sign(a_{Lang}) = -sign(\frac{\partial V}{\partial t}) \xrightarrow{-} Rückwärts$$

Bei der stationären Fahrt ( $a_{Long} \approx \frac{\partial V}{\partial t} \approx 0$ ) können zum Beispiel die Vorzeichen für die Querbeschleunigung und die Gierrate miteinander verglichen werden:

$$sign(a_{Lang}) = sign(\psi) \xrightarrow{-} Vorwärts$$

$$sign(a_{Lang}) = -sign(\psi) \xrightarrow{-} Rückwärts$$

In einem anderen Modul wird bevorzugt eine Berechnung der Kurvenradien durchgeführt:

$$R = \frac{V}{\psi}$$

R - Kurvenradius

Kurvenradien können zum Beispiel für die adaptive Steuerung der Scheinwerfer benutzt werden.

Bevorzugt wird in einem Softwaremodul der Müdigkeitszustand des Fahrers erkannt, wobei zum Beispiel die zeitlichen Ableitungen des Lenkwinkels überwacht werden können, die als eine Basis für die Erkennung der Müdigkeit des Fahrers dienen können. Wenn der Fahrer müde ist, wird das Lenkrad für ein langes Zeitinterwahl nicht bewegt und dann eine sprunghafte Bewegung durchgeführt. In diesem Fall kann ein Warnsignal ausgegeben werden. Durch diese Erkennung der spezifischen Lenkbewegung beim Aufschrecken aus dem Sekundenschlaf wird somit die Fahrsicherheit erhöht.

## Patentansprüche

1. **Fahrzeugsensoreinrichtung**, umfassend zumindest einen Sensor zur Erfassung der Gierrate eines Fahrzeugs, zumindest einen Sensor zur Erfassung der Querbeschleunigung eines Fahrzeugs, zumindest eine Recheneinheit und zumindest eine Schnittstelle eines Datenbusses, insbesondere CAN oder FlexRay, über den die Sensorsignale oder aus diesen ermittelte Sensordaten mindestens einem elektronischen Steuergerät übermittelt werden können, **dadurch gekennzeichnet, dass** ein relativer Lenkwinkelsensor ausschließlich mit der Fahrzeugsensoreinrichtung verbunden ist, insbesondere mit den anderen Sensoren in einem Gehäuse integriert ist, und die Recheneinheit eine Kalibrierung der relativen Lenkwinkelsignale zumindest mittels der Daten oder Signale des Gierratensensors und/oder des Querbeschleunigungssensors vornimmt, und dass über die zumindest eine Schnittstelle eines Datenbusses absolute Lenkwinkeldaten bereitgestellt werden.

2. Fahrzeugsensoreinrichtung nach Anspruch 1, **dadurch gekennzeichnet, dass** über zumindest eine Schnittstelle Fahrgeschwindigkeitsdaten empfangen werden, und dass die Gierratensignale und Querbeschleunigungssignale mittels dieser Daten auf Plausibilität überprüft werden, insbesondere indem überprüft wird, ob das Produkt aus Gierrate und Fahrzeuggeschwindigkeit betragsmäßig um nicht mehr als einen vorgegebenen Schwellenwert von der gemessenen Querbeschleunigung abweicht.

3. Fahrzeugsensoreinrichtung nach Anspruch 2, **dadurch gekennzeichnet, dass** die Fahrgeschwindigkeitsdaten eine von Raddrehzahlsensoren abgeleitete Fahrzeuggeschwindigkeit und/oder Radgeschwindigkeiten mehrerer Räder und/oder eine von Navigationsdaten abgeleitete Fahrzeuggeschwindigkeit umfassen.

4. Fahrzeugsensoreinrichtung nach einem der vorhergehenden Ansprüche, **dadurch gekennzeichnet, dass** die Recheneinheit zusätzlich eine Plausibilisierung und/oder Kalibrierung der Gierratensignale und/oder der Querbeschleunigungsignale und/oder eine Plausibilisierung der Lenkwinkelsignale vornimmt.

5. Fahrzeugsensoreinrichtung nach mindestens einem der vorhergehenden Ansprüche, **dadurch gekennzeichnet, dass** die Recheneinheit als kernredundanter Mikrocontroller ausgeführt ist.

6. Fahrzeugsensoreinrichtung nach Anspruch 5, **dadurch gekennzeichnet, dass** mindestens ein Sensor redundant ausgeführt ist, insbesondere Gierratensensor, Querbeschleunigungssensor und Lenkwinkelsensor ausgeführt sind.

7. Fahrzeugsensoreinrichtung nach mindestens einem der vorhergehenden Ansprüche, **dadurch gekennzeichnet, dass** diese mindestens einen Längsbeschleunigungssensor umfasst.

8. Fahrzeugsensoreinrichtung nach mindestens einem der vorhergehenden Ansprüche, **dadurch gekennzeichnet, dass** diese ein Modul zur Ansteuerung von Airbags umfasst, wobei die Daten eines oder mehrerer Beschleunigungs- und/oder Körperschallsensoren von der Recheneinheit ausgewertet werden.

9. Fahrzeugsensoreinrichtung nach mindestens einem der vorhergehenden Ansprüche, **dadurch gekennzeichnet, dass** die Recheneinheit einen Servomotor zur Unterstützung der Lenkbewegung durch den Fahrer ansteuert, und insbesondere ein zusätzliches Lenkmoment nach Maßgabe von über mindestens eine Schnittstelle empfangenen Daten aufbringt.

10. Fahrzeugsensoreinrichtung nach mindestens einem der vorhergehenden Ansprüche, **dadurch gekennzeichnet, dass** diese eine Stromversorgungseinrichtung umfasst, welche mit einem Bordnetz des Fahrzeugs verbunden ist und mindestens eine stabilisierte Spannung bereitstellt, sowie vorzugsweise einen Kondensator aufweist, der einen Ausfall des Bordnetzes für zumindest eine vorgegebene Zeitdauer überbrücken kann.

11. Fahrzeugsensoreinrichtung nach mindestens einem der vorhergehenden Ansprüche, **dadurch gekennzeichnet, dass** die Recheneinheit eine Überprüfung der Müdigkeit des Fahrers ausführt, wobei über zumindest eine Schnittstelle eine Warnung ausgegeben wird, wenn der Lenkradwinkel und/oder die Lenkradwinkelgeschwindigkeit für einen ersten vorgegebenen Zeitraum einen ersten vorgegebenen Schwellenwert unterschreitet und anschließend vor Ablauf eines zweiten vorgegebenen Zeitraums einen zweiten vorgegebenen Schwellenwert überschreitet.

12. Fahrzeugsensoreinrichtung nach mindestens einem der vorhergehenden Ansprüche, **dadurch gekennzeichnet, dass** die Recheneinheit nach Maßgabe einer Anforderung durch ein elektronisches Steuergerät und/oder nach Maßgabe einer Überprüfung der vorhandenen Sensoren und/oder nach Maßgabe einer gespeicherten Konfiguration Funktionen für ein oder mehrere Steuergeräte bereitstellt, wobei eine Übermittlung von Daten über mindestens eine Schnittstelle erfolgt.

**13.** Verwendung einer Fahrzeugsensoreinrichtung nach mindestens einem der Ansprüche 1 bis 12 in einem Bremssystem für ein durch einen Verbrennungsmotor und/oder mindestens einen Elektromotor angetriebenes Kraftfahrzeug, wobei das Bremssystem Mittel zum fahrerunabhängigen Aufbau von Bremsmoment an einem oder mehreren Rädern und mindestens ein elektronisches Steuergerät umfasst, welches Signale von mindestens einem Raddrehzahlsensor empfängt und das oder die Mittel zum fahrerunabhängigen Aufbau von Bremsmoment ansteuert, und wobei die Fahrzeugsensoreinrichtung und das elektronische Steuergerät über mindestens einen Datenbus miteinander verbunden sind.

**14.** Verwendung nach Anspruch 13, **dadurch gekennzeichnet, dass** die Recheneinheit der Fahrzeugsensoreinrichtung eine Fahrdynamikregelung ausführt und über mindestens eine Schnittstelle eines Datenbusses Bremsanforderungen an das oder die Steuergeräte des Bremssystems sendet, wobei insbesondere die Radbremsen mindestens einer Achse elektromechanisch betrieben werden.

**15.** Verwendung nach Anspruch 13 oder 14, **dadurch gekennzeichnet, dass** das Bremssystem an den Rädern mindestens einer Achse hydraulische Radbremsen, sowie einen Hydraulikblock mit mindestens einer Pumpe und mindestens einem Hydraulikventil umfasst, und dass das elektronische Steuergerät den Hydraulikblock zur fahrerunabhängigen Änderung des Bremsdrucks ansteuern kann.

## Claims

**1.** Vehicle sensor device, comprising at least one sensor for detecting the yaw rate of a vehicle, at least one sensor for detecting the lateral acceleration of a vehicle, at least one computing unit and at least one interface of a data bus, especially CAN or FlexRay, via which the sensor signals or sensor data derived therefrom can be transmitted to at least one electronic control device, **characterized in that** a relative steering angle sensor is only connected to the vehicle sensor device and is especially integrated with the other sensors in a housing, and the computing unit carries out a calibration of the relative steering angle signals at least using the data or signals of the yaw rate sensor and/or of the lateral acceleration sensor, and that absolute steering angle data are provided via the at least one data bus interface.

**2.** Vehicle sensor device according to Claim 1, **characterized in that** vehicle speed data are received via at least one interface, and that the yaw rate signals and lateral acceleration signals are plausibility checked using said data, especially by checking whether the product of yaw rate and vehicle speed deviates in magnitude by not more than a specified threshold value from the measured lateral acceleration.

**3.** Vehicle sensor device according to Claim 2, **characterized in that** the vehicle speed data contains a vehicle speed derived from the wheel revolution rate sensors and/or wheel speeds of a plurality of wheels and/or a vehicle speed derived from navigation data.

**4.** Vehicle sensor device according to one of the preceding claims, **characterized in that** the computing unit additionally carries out plausibility checking and/or calibration of the yaw rate signals and/or the lateral acceleration signals and/or plausibility checking of the steering angle signals.

**5.** Vehicle sensor device according to at least one of the preceding claims, **characterized in that** the computing unit is implemented as a redundant core microcontroller.

**6.** Vehicle sensor device according to Claim 5, **characterized in that** at least one sensor is implemented in redundant form, especially a yaw rate sensor, lateral acceleration sensor and steering angle sensor.

**7.** Vehicle sensor device according to at least one of the preceding claims, **characterized in that** this includes at least one longitudinal acceleration sensor.

**8.** Vehicle sensor device according to at least one of the preceding claims, **characterized in that** this includes a module for controlling airbags, wherein the data of one or more acceleration and/or structural sound sensors is evaluated by the computing unit.

**9.** Vehicle sensor device according to at least one of the preceding claims, **characterized in that** the computing unit controls a servomotor for assisting the steering movement by the driver, and especially applies an additional steering torque according to data received via at least one interface.

**10.** Vehicle sensor device according to at least one of the preceding claims, **characterized in that** it comprises a power supply device, which is connected to a vehicle electrical system of the vehicle and provides at least one stabilized voltage, and preferably comprises a capacitor that can bridge a failure of the vehicle electrical system for at least a specified period of time.

**11.** Vehicle sensor device according to at least one of the preceding claims, **characterized in that** the computing unit carries out checking for driver fatigue, wherein a warning is output if the steering wheel angle and/or the steering wheel angular rate fall(s) below a first specified threshold value for a first specified period of time and subsequently exceed(s) a second specified threshold value before the expiry of a second specified period of time.

**12.** Vehicle sensor device according to at least one of the preceding claims, **characterized in that** the computing unit provides functions for one or more control devices according to a request by an electronic control device and/or according to a check of the provided sensors and/or according to a stored configuration, wherein transmission of data is carried out via at least one interface.

**13.** Use of a vehicle sensor device according to at least one of the Claims 1 to 12 in a brake system for a motor vehicle driven by means of an internal combustion engine and/or at least one electric motor, wherein the brake system comprises means for the driver-independent build-up of brake torque at one or more wheels and at least one electronic control device, which receives signals from at least one wheel revolution rate sensor and controls the means for the driver-independent build-up of brake torque, and wherein the vehicle sensor device and the electronic control device are connected to each other via at least one data bus.

**14.** Use according to Claim 13, **characterized in that** the computing unit of the vehicle sensor device carries out vehicle dynamics control and sends brake demands to the control device(s) of the brake system via at least one interface of a data bus, wherein especially the wheel brakes of at least one axle are electromechanically operated.

**15.** Use according to Claim 13 or 14, **characterized in that** the brake system at the wheels of at least one axle comprises hydraulic wheel brakes and a hydraulic block with at least one pump and at least one hydraulic valve, and that the electronic control device can control the hydraulic block for driver-independent changing of the brake pressure.

## Revendications

**1.** Système de capteurs de véhicule, comprenant au moins un capteur destiné à détecter le taux d'embardée d'un véhicule, au moins un capteur destiné à détecter l'accélération transversale d'un véhicule, au moins une unité de calcul et au moins une interface d'un bus de données, en particulier CAN ou FlexRay, par l'intermédiaire duquel les signaux de capteur ou les données de capteurs déterminées à partir de ceux-ci peuvent être transmis au moins à un appareil électronique, **caractérisé en ce qu'**un capteur d'angle de braquage relatif est connecté exclusivement au système de capteurs de véhicule et est en particulier intégré avec les autres capteurs dans un boîtier, et l'unité de calcul procède à un étalonnage des signaux d'angle de braquage relatif au moins au moyen des données ou des signaux du capteur de taux d'embardée et/ou du capteur d'accélération transversale, et **en ce que** des données d'angle de braquage absolu sont fournies par l'intermédiaire d'au moins une interface d'un bus de données.

**2.** Système de capteurs de véhicule selon la revendication 1, **caractérisé en ce que** des données de vitesse de conduite sont reçues par l'intermédiaire d'au moins une interface, et **en ce que** les signaux de taux d'embardée et les signaux d'accélération transversale sont contrôlés du point de vue de la plausibilité en vérifiant en particulier si le produit du taux d'embardée par la vitesse du véhicule présente une valeur qui ne s'écarte pas de plus d'une valeur de seuil prédéterminée de l'accélération transversale mesurée.

**3.** Système de capteurs de véhicule selon la revendication 2, **caractérisé en ce que** les données de vitesse de conduite comprennent une vitesse de véhicule dérivée des capteurs de vitesse de rotation des roues et/ou des vitesses de roues de plusieurs roues et/ou une vitesse de véhicule dérivée de données de navigation.

**4.** Système de capteurs de véhicule selon l'une quelconque des revendications précédentes, **caractérisé en ce que** l'unité de calcul procède en outre à une détermination de plausibilité et/ou à un étalonnage des signaux de taux d'embardée et/ou des signaux d'accélération transversale et/ou à une détermination de plausibilité des signaux d'angle de braquage.

**5.** Système de capteurs de véhicule selon au moins l'une des revendications précédentes, **caractérisé en ce que** l'unité de calcul est réalisée sous la forme d'un microcontrôleur à noyaux redondants.

**6.** Système de capteurs de véhicule selon la revendication 5, **caractérisé en ce qu'**au moins un capteur est réalisé de manière redondante, en particulier, **en ce que** le capteur de taux d'embardée, le capteur d'accélération transversale et le capteur d'angle de braquage sont réalisés de manière redondante.

**7.** Système de capteurs de véhicule selon au moins l'une des revendications précédentes, **caractérisé**

**en ce qu'**il comprend au moins un capteur d'accélération longitudinale.

8. Système de capteurs de véhicule selon au moins l'une des revendications précédentes, **caractérisé en ce qu'**il comprend un module de commande de coussin gonflable, dans lequel les données d'un ou plusieurs capteurs d'accélération et/ou de bruit structurel sont évaluées par l'unité de calcul.

9. Système de capteurs de véhicule selon au moins l'une des revendications précédentes, **caractérisé en ce que** l'unité de calcul commande un servomoteur d'assistance au mouvement de braquage effectué par le conducteur, et en particulier, applique un couple de braquage supplémentaire conformément à des données reçues par l'intermédiaire d'au moins une interface.

10. Système de capteurs de véhicule selon au moins l'une des revendications précédentes, **caractérisé en ce qu'**il comprend un système d'alimentation en courant qui est connecté au réseau de bord du véhicule et délivre au moins une tension stabilisée, et **en ce qu'**il comporte également de préférence un condensateur qui peut compenser une panne du réseau de bord pendant au moins un intervalle de temps prédéterminé.

11. Système de capteurs de véhicule selon au moins l'une des revendications précédentes, **caractérisé en ce que** l'unité de calcul effectue un contrôle de la fatigue du conducteur, dans lequel une alarme est émise par l'intermédiaire d'une interface lorsque l'angle du volant de direction et/ou la vitesse angulaire du volant de direction s'abaissent pendant un premier intervalle de temps prédéterminé en dessous d'une première valeur de seuil prédéterminée puis dépassent une seconde valeur de seuil prédéterminée avant l'écoulement d'un deuxième intervalle de temps prédéterminé.

12. Système de capteurs de véhicule selon au moins l'une des revendications précédentes, **caractérisé en ce que** l'unité de calcul fournit, conformément à une demande, par l'intermédiaire d'un appareil électronique et/ou conformément à un contrôle effectué par les capteurs présents et/ou conformément à une configuration mémorisée, des fonctions destinées à un ou plusieurs appareils, dans lequel une transmission de données est effectuée par l'intermédiaire d'au moins une interface.

13. Utilisation d'un système de capteurs de véhicule selon au moins l'une des revendications 1 à 12 dans un système de freinage destiné à un véhicule à moteur entraîné par un moteur à combustion interne et/ou au moins un moteur électrique, dans laquelle le système de freinage comprend des moyens destinés à établir un couple de freinage indépendamment du conducteur sur une ou plusieurs roues et au moins un appareil de commande électronique qui reçoit des signaux en provenance d'au moins un capteur de vitesse de rotation de roues et commande le ou les moyen (s) d'établissement d'un couple de freinage indépendamment du conducteur, et dans lequel le système de capteurs de véhicule et l'appareil de commande électronique sont connectés l'un à l'autre par l'intermédiaire d'au moins un bus de données.

14. Utilisation selon la revendication 13, **caractérisée en ce que** l'unité de calcul du système de capteurs de véhicule effectue une régulation de la dynamique de conduite et envoie des demandes de freinage à l'appareil ou aux appareils de commande du système de freinage par l'intermédiaire d'au moins une interface d'un bus de données, dans lequel les freins de roues d'au moins un axe sont en particulier actionnés de manière électromécanique.

15. Utilisation selon la revendication 13 ou 14, **caractérisée en ce que** le système de freinage comprend, sur les roues d'au moins un essieu, des freins de roues hydrauliques, ainsi qu'un bloc hydraulique comportant au moins une pompe et au moins une vanne hydraulique, et **en ce que** l'appareil de commande électronique peut commander le bloc hydraulique pour modifier la pression de freinage indépendamment du conducteur.

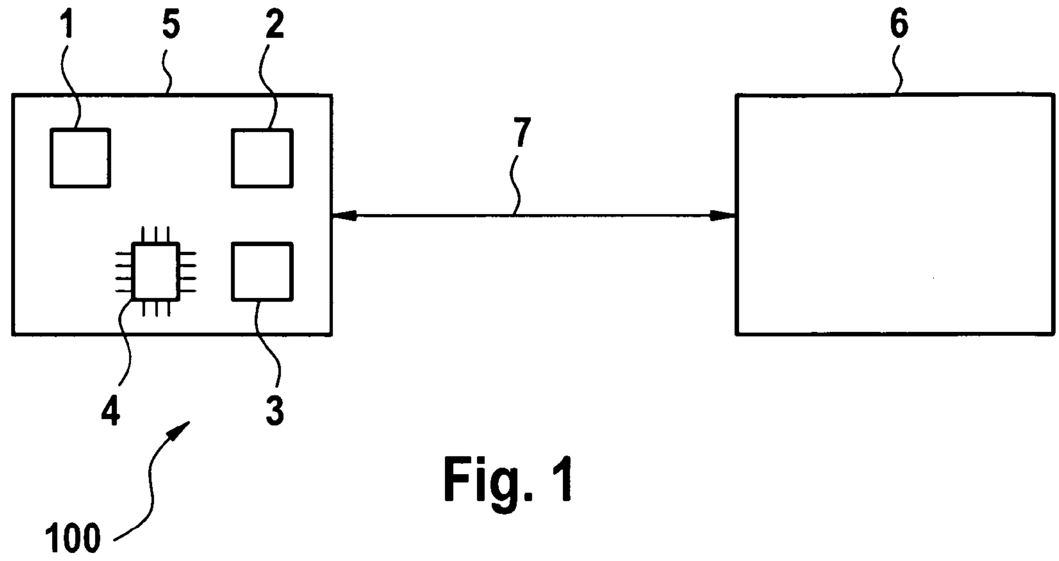


Fig. 1

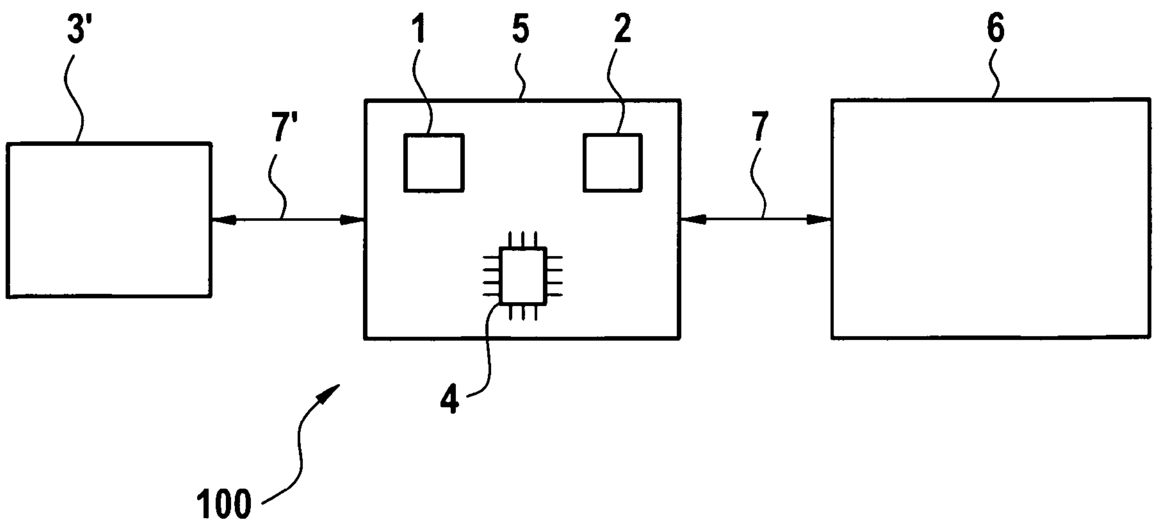


Fig. 2

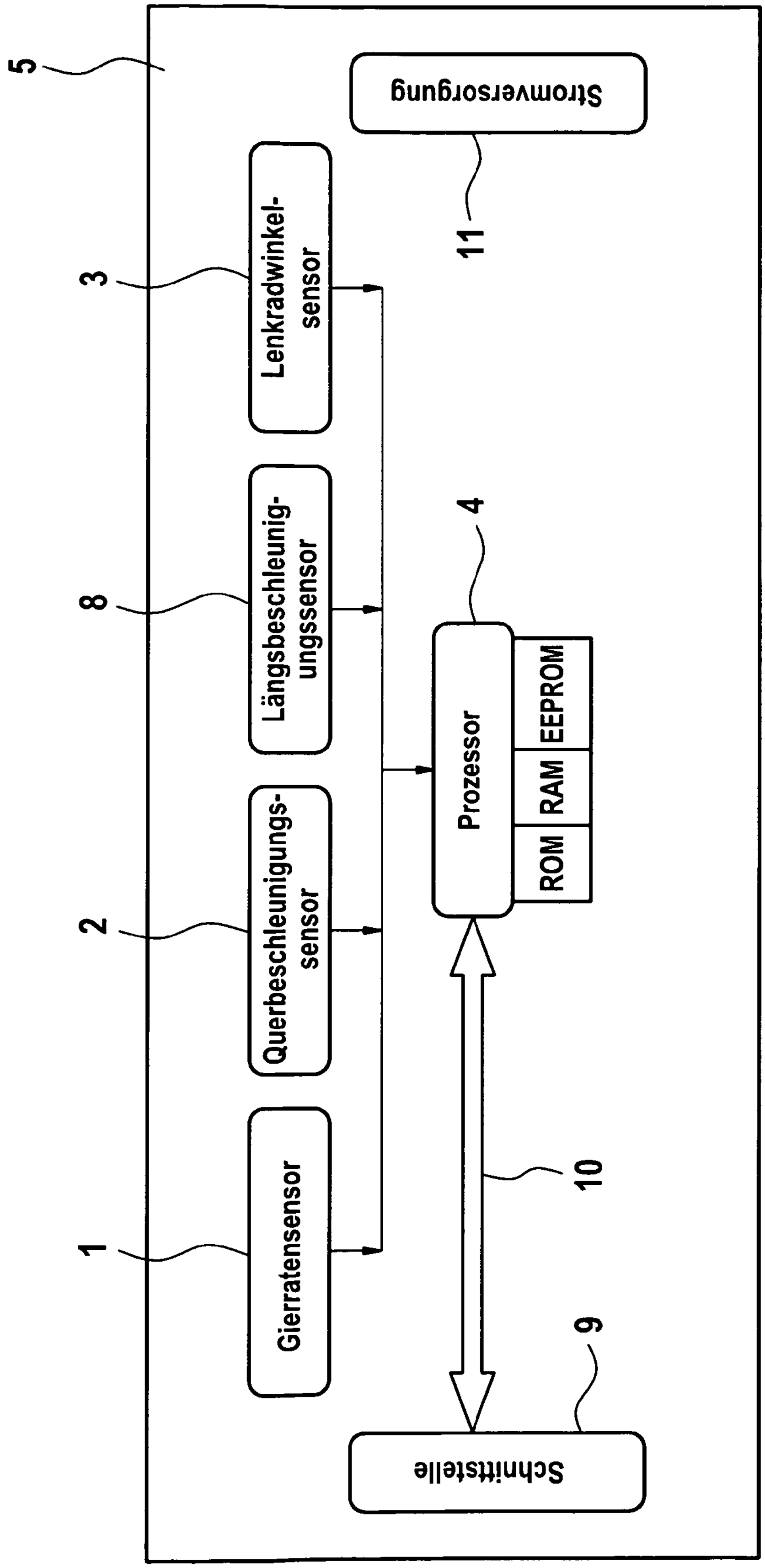
5
1
2
8
3
Gierratensensor
Querbeschleunigungs-
sensor
Längsbeschleunig-
ungssensor
Lenkradwinkel-
sensor
Stromversorgung
11
4
Prozessor
ROM
RAM
EEPROM
10
9
Schnittstelle

Fig. 3

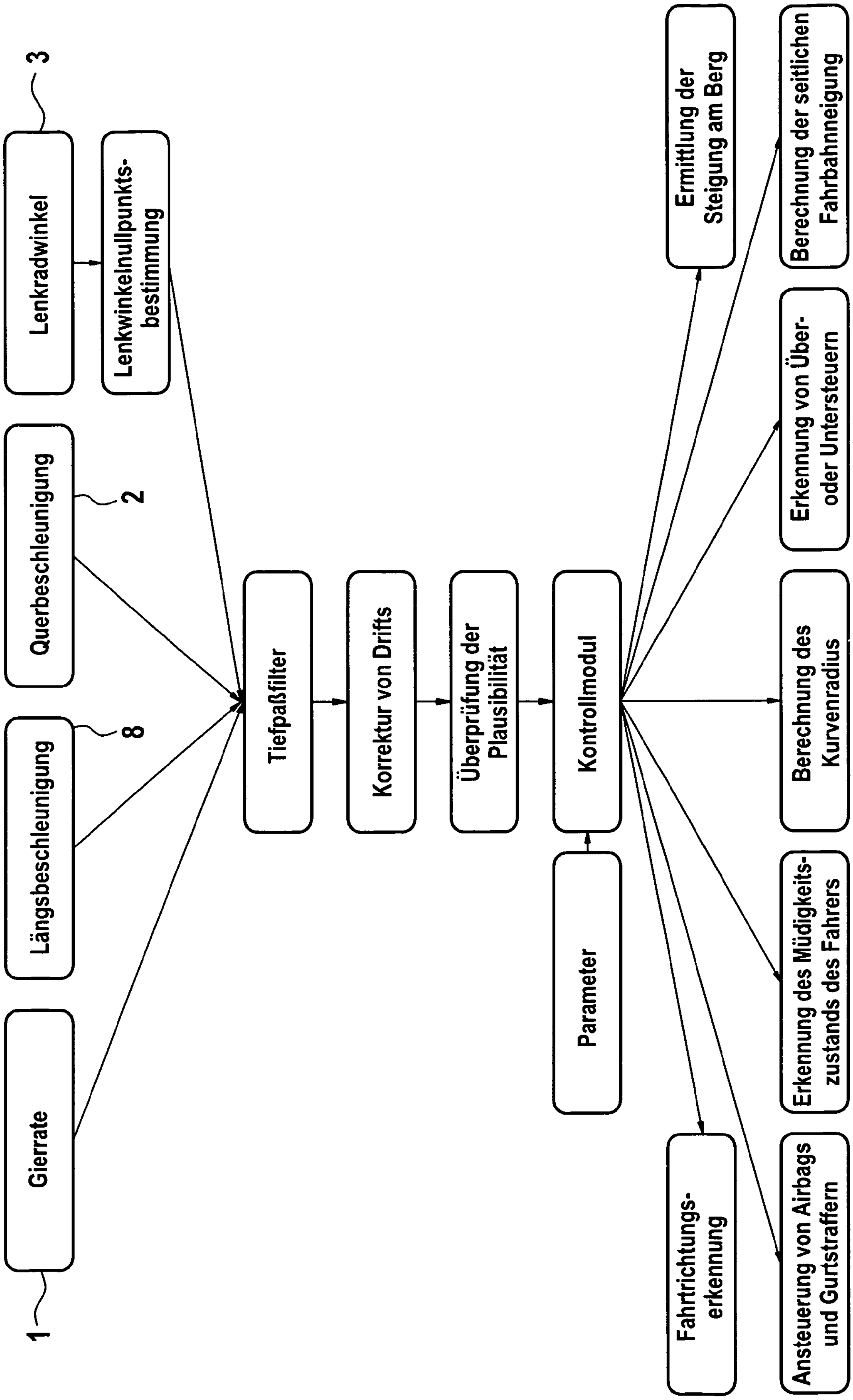
Gierrate
1
Längsbeschleunigung
8
Querbeschleunigung
2
Lenkradwinkel
3
Lenkwinkelnullpunkts-bestimmung
Tiefpaßfilter
Korrektur von Drifts
Überprüfung der Plausibilität
Kontrollmodul
Parameter
Fahrtrichtungs-erkennung
Ansteuerung von Airbags und Gurtstraffern
Erkennung des Müdigkeits-zustands des Fahrers
Berechnung des Kurvenradius
Erkennung von Über- oder Untersteuern
Berechnung der seitlichen Fahrbahnneigung
Ermittlung der Steigung am Berg

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008003346 A1
- DE 10107949 B4
- EP 1313635 B1
- DE 102006046834 A1
- US 20040061500 A1